# EUROPEAN PATENT APPLICATION

(11) **EP 4 636 520 A1**
(43) Date of publication of application: **22.10.2025**
(21) Application number: 24171297.5
(22) Date of filing: 19.04.2024
(51) Int. Cl.: G05B 23/02

(54) **CONDITION MONITORING OF AN ELECTRO-MECHANICAL SYSTEM AND/OR A PROCESS CONTROLLED BY THE ELECTRO-MECHANICAL SYSTEM**

(71) Applicant: Siemens Aktiengesellschaft, 80333 München (DE)
(72) Inventor: Al Hage Ali, Ali, 91056 Erlangen (DE); Amschler, Benjamin, 95500 Heinersreuth (DE); Siegl, Alexander, 91052 Erlangen (DE); Ziegler, Sophia, 90518 Altdorf (DE)
(74) Representative: Siemens Patent Attorneys

(57) **Abstract**

A, preferably computer-implemented, method of condition monitoring of an electro-mechanical system and/or a process controlled by the electro-mechanical system, comprising the steps of: determining an anomaly in operating data of the electro-mechanical system, wherein the operating data comprises a plurality of time series, wherein each time series corresponds to actual values, preferably obtained by one or more sensors, and/or setpoint values (varying over time) of the electro-mechanical system, labeling the anomaly, e.g., based on user input, the labeling comprising an indication of a recommended action, in particular a maintenance task, for mitigating and/or resolving a condition causing the anomaly.

## Description

### Technical Field

The present disclosure relates to the field of electro-mechanical systems, such as motors with or without power converters, processes controlled by such electro-mechanical systems, for example in the discrete automation and/or process automation domain, where either products are produced or materials processed, and to use techniques for monitoring the condition of the electro-mechanical systems and/or the controlled process.

### Background Art

Due to new technical trends and technologies, artificial intelligence is finding its way into numerous business areas. This trend also affects the manufacturing industries in which edge technology is used. Therein, software applications for converter analysis enables the condition monitoring of the converter, the connected drive system, and the controlled process. In particular, the combination of edge computing and converters allows condition monitoring directly on the field or production level. This enables to check the availability of the production system, the quality produced, and/or the maintenance planning.

During the operation of a process comprising one or more electro-mechanical systems, changes occur over time that may not be recognizable to the operator. These changes can be caused by the mechanics of the electro-mechanical systems, but can also have electrical reasons. This can lead to increased wear in the electro-mechanical systems or influence the produced quality of a product or material processed. If changes in the process are not detected at an early stage, this may lead to increased downtime and additional or increased maintenance costs. A recognition of gradual changes may also be rather subjective, i.e., based on the individual assessment of a respective operator.

Technically complex relationships such as the correlation and the detection of changes with regard to a large number of simultaneously relevant process parameters and/or parameters of the electro-mechanical system can hardly be monitored and correctly assessed by the operator. For example, changes in an electro-mechanical system, also denoted as drive system, comprising an electric power converter, a motor and/or transmission, and/or in the process, could therefore usually only be detected when the change has become noticeable, e.g., in the form of a shutdown and/or a quality defect. The monitoring functions and analysis options available in the converter partly provide active protection and may serve for detecting problems occurring in the process. However, the analysis is only performed retroactively and not during the occurrence of the damage.

Through regular manual inspection and continuous maintenance of the process components, the condition of the process and machines may be monitored. In most cases, changes or problems are only detected when machines and systems have failed. The manual fault analysis thus only begins when the problem has already occurred and possibly high costs have arisen due to machine and process downtime. In addition, the experience of the maintenance and service personnel plays a decisive role in an analysis.

International patent application PCT/EP2021/069728 discloses a method of optimizing a control loop of a converter, the method comprising the steps of: acquiring actual values of a drive system powered by the converter, inferring, based on at least one machine learning model and the actual values, one or more adjustments of control parameters of the control loop for improving the control accuracy, outputting the adjustments for adapting the control parameter values.

Furthermore it is disclosed in European patent application EP21200255 to improve the monitoring of a machine by providing training data of several nominal operating states of the machine and to cluster the training data according to the operating states of the machine and to train a classifier that assigns the operating states to the clustered training data.

### Summary

However, most solutions for monitoring a process are currently regarded as pure anomaly detection, i.e., are unsupervised. This is due to the fact, that labeled data is usually missing or it is very time-consuming and cost-intensive to generate anomalous data in advance. In particular complex electro-mechanical systems have many components that interact with each other, so the number of possible faults is very high and usually not known in advance. As a rule, different groups of people must also be consulted to explain an anomaly. Currently no explanation of the anomaly is available to help the user, e.g., an operator, interpret the fault and give transparency about the decision of the anomaly detection model. Furthermore, fault identification and/or specific recommendations for action are not available. Without a specific fault identification or recommended action, troubleshooting and/or rectification involves significantly more effort. This in turn leads to longer downtimes and higher costs. There is no possibility of labeling anomalies and documenting the measures taken during operation. As mentioned, collecting anomaly data in advance is very time-consuming and cost-intensive, especially for complex applications. Thus, there is a lack of a so-called closed-loop approach where different groups of users, e.g., operators, drive technicians, etc., can contribute their expertise to improving the anomaly detection and/or fault explanation. Thus, the process know-how remains with the respective user, e.g. the operator, and does not flow back into the anomaly detection and/or fault explanation, so that no continuous optimization and expansion of the anomaly detection takes place.

It is thus an object to overcome these drawbacks and to detect critical changes in the condition of the electro-mechanical system and/or the controlled process, i.e. the drive application, based on specific parameters and to provide assistance in interpreting possible causes and/or indication possible measures.

According to a first aspect, a, preferably computer-implemented, method of condition monitoring of an electro-mechanical system and/or a process controlled by the electro-mechanical system is proposed. The method comprising the step of determining an anomaly in operating data of the electro-mechanical system, wherein the operating data comprises a plurality of time series, wherein each time series corresponds to actual values, preferably obtained by one or more sensors, and/or setpoint values (varying over time) of the electro-mechanical system. The method further comprising labeling the anomaly, e.g., based on user input, the labeling comprising an indication of a recommended action, in particular a maintenance task, for mitigating and/or resolving a condition causing the anomaly.

According to a second aspect a computer program, preferably stored on a non-transitory medium, is proposed. The computer program comprising program code that when executed performs any one of the method steps according to the first aspect.

According to a third aspect an apparatus, preferably comprising a processor and a memory, is proposed. The apparatus operative to perform the method steps accordin tot the first and/or second aspect.

According to a fourth aspect a system comprising an electro-mechanical system and the apparatus according to the third aspect is proposed.

### Brief Description of the Drawings

Figure 1 shows a schematic illustration of a converter powering a drive system.
Figure 2 shows a table comprising a plurality of operating parameters of a converter

### Detailed Description

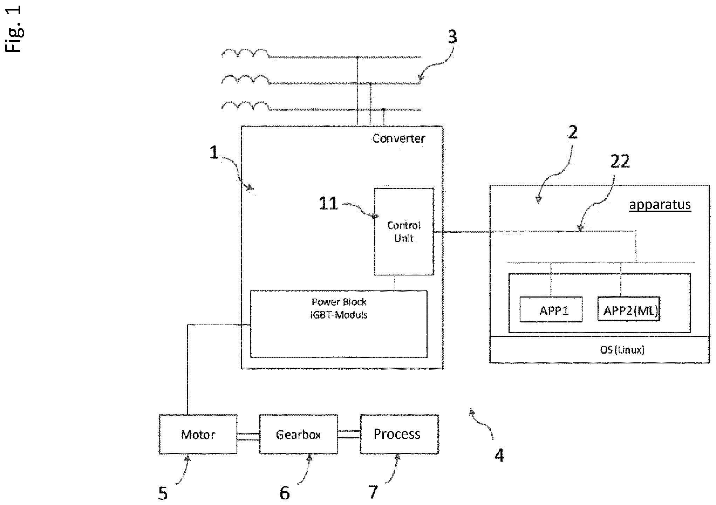

In Figure 1 an electric power converter 1, also denoted as converter in the following, of an electro-mechanical system 4, also denoted as drive system, is shown. The control of the drive system 4 may be performed by the converter 1 and a control unit 11 preferably integrated into the converter 1. To that end, the converter 1 may be part of a control loop and may comprise a processor and a memory to control the drive system 4. The converter 1 hence powers a electrical motor 5 of the drive system 4. The drive system 4 may thus comprise the converter 1, which is coupled to a, e.g., multi-phase, line voltage 3. The drive system 4 may thus further comprise the motor 5. A gearbox 6 may be coupled to the motor 5. The gearbox 6 may be coupled to a load 7, e.g., for performing one or more process steps for controlling a process, e.g., for the in the production and/or processing of a product. The control unit 11 of the converter 1 may control one or more insulated-gate bipolar transistors, IGBT, of a power block, which serve as electronic switches for providing electric energy to the motor 5. Alternatively, the motor 5 may be directly coupled to the load 7 and/or line voltage 3, i.e. without a gearbox and/or without a converter.

The converter 1 may be connected to an apparatus 2, e.g. an edge device or another computing device, such as an (industrial) computer. To that end, the control unit 11 of the converter 1 may be connected to a data bus 22 via which operating data, such as actual values and/or setpoint values of the converter are transmitted. The apparatus 2 may comprise one or more analytics software applications, APP1, APP2, i.e. one or more computer programs, e.g., comprising a machine learning model ML, for processing the operating data obtained from the converter 1. Hence, the control unit 11 may provide operating data to the one or more analytics software applications of the apparatus 2. As the case may be, the apparatus 2 may serve for providing connectivity of the converter 1 with a higher-level system such as a cloud computing system, not shown, and/or the apparatus 2 may serve as an on-site computing unit for processing the operating data provided by the converter 1. It should be understood that the data bus 22 is part of the apparatus 2 and may be coupled to the converter 1 via respective interfaces of the converter 1 and apparatus 2. The analytics software applications APP1, APP2 may be executed on an operating system OS, e.g. linux, of the apparatus 2.

Additionally or alternatively, e.g., in case the motor 5 is directly coupled to the line voltage 3, the apparatus may be coupled to one or more sensors attached to the motor 5 or located in the vicinity of the motor. The one or more sensors may provide the operating data to the apparatus and/or the analytics software applications APP1, APP2 of the apparatus 2. That is the one or more sensors, may provide actual values and/or setpoint values relating to the operation of the electro-mechanical system to the apparatus 2.

The proposed solution is capable of monitoring the drive system 4 including the application specific usage of the drive system 4, respectively. Existing operating data from the converter 1 may be used, in which case no additional measuring sensors may be required. The operating data is used to detect anomalies in the operation of the drive system 4 and/or the process controlled by the drive system. Thereby, one or more deviations from a normal operating state of the drive system and/or the process may be determined.

For the condition monitoring of the electro-mechanical system and/or the controlled process, at first anomaly detection may be necessary. Thereupon, a labeling of the anomaly may be performed, e.g. in order to determine one or more anomalous operating states and/or for identifying one or more actions for mitigating and/or resolving a condition causing the anomaly. Thus, one or more actions may be acquired, e.g. by user input, which may subsequently be recommended, thus recommended action, when the anomaly or the same type of anomaly occurs again. Such conditions may comprise wear and tear, and/or material qualities, etc.

Thus, in a first stage labeling of the anomaly is performed and thereby one or more fault categories may be created. Then, later on during the operation of the electro-mechanical system a classification of an anomaly occurring and/or determined may be performed. Thereupon, the recommended action can be carried out, e.g. automatically or by a user, in order to mitigate, remove, and/or resolve one or more conditions causing the anomaly. Such conditions may occur, e.g., due to faulty machinery or parts, sensors, or other that equipment can lead to unexpected variations or disruptions in the operation of the electro-mechanical system and/or the controlled process, and may require maintenance, repair and/or replacement.

Further conditions may be caused by changes in temperature, humidity, pressure, or other process parameters, which may be adapted by intervening into the control of the process, e.g. by said recommended actions. Still further recommended actions may include varying the setpoints of the electro-mechanical system, such as a speed setpoint and/or a torque setpoint of the electro-mechanical system.

The anomaly detection model may thus recognize changes in the parameters of the process or application that are critical or could lead to a reduction in production performance or quality of the product. To detect such anomalies, a defined parameter set from the converter is used to detect such anomalies.

Any detected anomalies nay then be analyzed in more detail. For example, analysis results and corrective measures can be entered and saved by a user. This enables a convenient comparison between anomalies are detected and anomaly situations that are already known and/or stored. This significantly simplifies and speeds up troubleshooting.

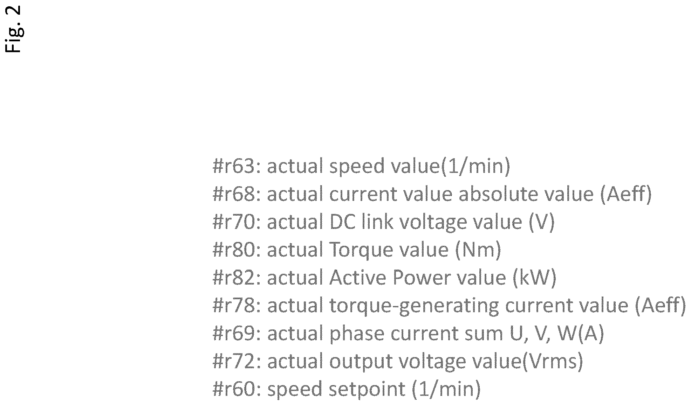

Figure 2 shows a table comprising a plurality of operating data obtained from a converter. The analytics software application APP1, APP2 may detect changes in the operation of the drive system 4, in particular the converter, which can be harmful or lead to a lower performance or quality of the production or product. The operating data of the converter as shown in Figure 2 may be used to detect these anomalies. The operating data can be identified using a variable name, such as given in the first column of Figure 2, e.g. the speed setpoint is identified by the variable name r60. The operating data may possess a physical unit in which they are measured or otherwise obtained, e.g., the speed setpoint is given in rpm, revolutions per minute. Other operating data such as the "actual current value absolute value" may be given in Arms, Ampere root mean square or in case of the "actual torque value" in Nm, Newtonmeter. The operating data may be provided in a data format such as float, e.g., FloatingPoint32, or the like and/or may be provided by the converter 1, e.g., via the control unit 11 and the data bus 22 to the analytics software application APP1, APP2, as e.g., shown in Figure 1.

Now, the converter may provide the operating data, e.g., every few millisenconds, for example every 250 ms, as described in European patent application publication EP 4239419 A1. This high data rate leads to a significant amount of data, i.e., data volume, that has to be stored and processed by the edge device 2 and/or the respective analytics software applications APP1, APP2. Additionally, more than one converter, i.e. a pluraltity of converters may be coupled to the edge device and these converters may transmit their respective operating parameters to the (same) apparatus 2. As described in European patent application publication EP 4239419 A1 representative samples of the operating data may be determined which may be used for anomaly detection, and condition monitoring in general. It should be understood that, instead of the converter, one or more sensors may provide a sensor signal which is sampled, e.g., as in the above every 250ms, and thus operating data is obtained from the one or more sensors and may be used to determine an anomaly in the operation of the electro-mechanical system and/or the controlled process.

In addition, torque setpoint and/or current setpoint and /or voltage setpoint, e.g. for the DC link, may be used.

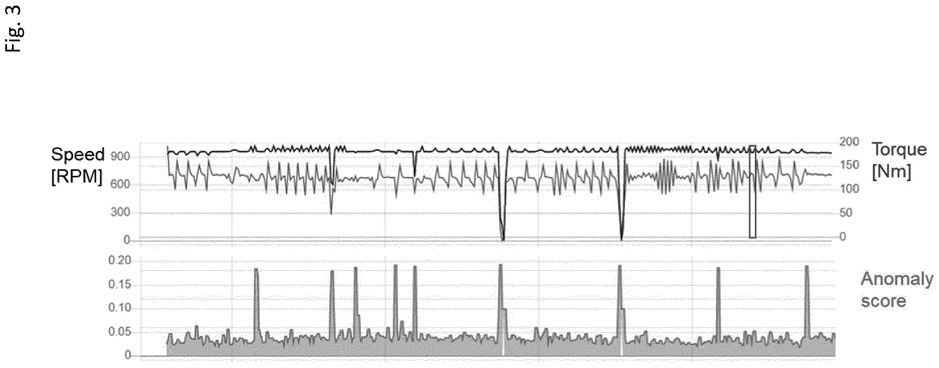

In Figure 3 times series of the actual speed values and of the actual torque values of the electro-mechanical system are shown in the upper part. In the lower part of figure 3 an anomaly score of theses time series is shown.

Thus, in a first time series the actual values of a first parameter relating to the operation of the electro-mechanical system are provide. In this case the actual values of the speed in revolutions per minute are provided. In a second time series the actual values of a second parameter relating to the operation of the electro-mechanical device are provide. In this case the actual values of the torque of the electro-mechanical system are provided. The time series may relate to the same period of time during the operation of the electro-mechanical system. The time periods for which the time series are acquired preferably are at least overlapping in part. The time series for the actual values of the preferably different parameters relating to the operation of the electro-mechanical system form the operating data.

Of course, the actual values and/or setpoint values, e.g., of one or more of the parameters shown in Figure 2 may be comprised in the operating data. It should be understood that also the setpoint values may change during the operation of the electro-mechanical system and may thus form a time series, e.g., which may also be used in addition or instead of the actual values of the one or more parameters relating to the operation of the electro-mechanical device.

Now, the operating data is used to determine an anomaly or anomaly score. Hitherto a comparison may be performed between at least a segment, i.e. a subperiod of time for which the time series are recorded, of the operating data and a fingerprint, which serves as a reference for determining one or more conditions of the electro-mechanical system. Thus, a multivariate analysis is performed to determine an anomaly score relating to the operation of the electro-mechanical system and/or the controlled process. The creation of a fingerprint for identifying a normal or abnormal state of operation of the electro-mechanical system is for example described in European patent application publication EP 4239419 A1. For example, the fingerprint may serve creating and/or training a machine learning model for classifying the operating data into one or more normal and/or one or more abnormal, i.e. anomalous, operating states or conditions, i.e. for determining an anomaly or an anomaly score. Such an anomaly score relating to the operating data is shown in the lower part in Figure 3.

Thus, the anomaly detection detects changes in the system based on a predefined reference state, i.e. the so-called fingerprint, which for example represents a normal operating condition of the system and/or controlled process. The anomaly detection may calculate a so-called anomaly score, which is an indicator of the amount of the deviation from the fingerprint. In Figure 3, the peaks in the anomaly score indicate a high deviation from the fingerprint. These areas are detected as an anomaly.

The anomaly score may be determined, and/or output and/or display, e.g., continuously during the operation of the electro-mechanical device, e.g., to a user and/or for the user to monitor the operation of the electro-mechanical system and/or the controlled process. As shown in Figure 3 an outlier in the actual data of the time series, i.e. operating data, usually causes the anomaly score to indicate the presence of an anomaly, which may require the attention of the user and/or specific actions to be carried out in order to resolve and/or mitigate the anomaly. Such actions may comprise repair or other types of maintenance such as cleaning or replacement, and may relate to the electro-mechanical device and/or the controlled process.

Due to the lack of fault classification and specific recommendations for action troubleshooting today is done manually in case an anomaly occurs. Furthermore, even if changes or anomalies occur and/or are detected there is no further classification, e.g., of the fault. Anomalous data for various fault cases is usually collected in advance through cost-intensive measurement campaigns and time-consuming labeling, which can only cover a portion of the possible fault cases, but many faults are only detected during operation. Still further, the condition monitoring usually ends when an anomaly is detected. There is no feedback or evaluation from experts on site in the field. Thus, there is no feedback from the process back to the condition monitoring solution. Thus, a closed-loop approach for explaining and labeling anomalies during operation and for classifying faults together with recommendations for action.

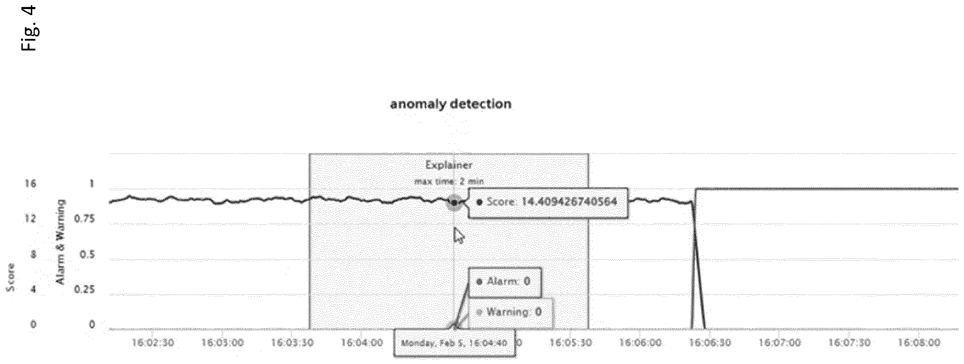

Now turning to Figure 4 an anomaly score is shown. Therein a high anomaly score indicates nominal behavior of the electro-mechanical system and/or of the controlled process. A low score, i.e. close to 0, indicates an anomalous behavior of the electro-mechanical system and/or of the controlled process. At first, until a point in time, i.e., 16:06:30, the score has a value of roundabout 14.409 and then drops to 0. Thereupon, an alarm is raised which indicates that an anomaly has been detected. Alternatively, and depending on the anomaly score a warning may be output by the one or more software applications. The anomaly score, the alarm and/or the warning may be visualized, e.g. on a display. Thus, a user may monitor the behavior of the of the electro-mechanical system and/or of the controlled process. A user may selected a segment of the operating data or the segment of the time series. As shown in Figure 4 a segment showing nominal operation has been selected. In the general case, a user may create an event for identifying an operating state, i.e. any operating state, e.g., one or more nominal operating states of the electro-mechanical device and/or the controlled process. Thus, a user may create such one or more events for identifying an operating state, in particular one or more fault categories, as described herein.

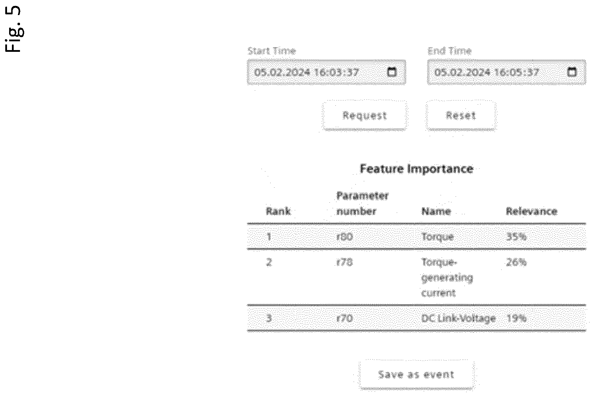

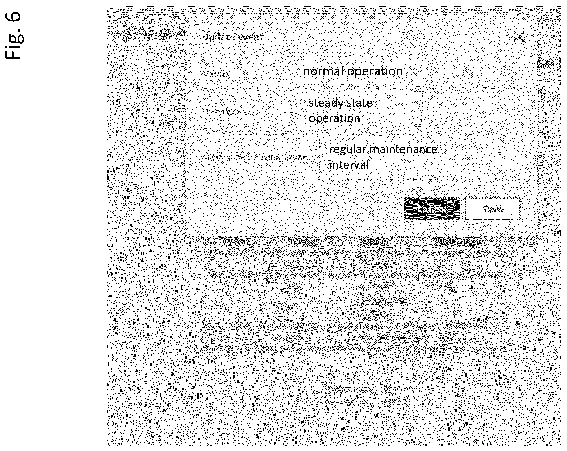

Figure 5 shows an illustration of the impact scores of the actual values of the torque, the torque generating current, and the DC link voltage in connection with the segment selected in Figure 4, i.e. showing nominal operation. The impact score is also referred to as and/or may correspond to feature importance. Therein, the feature may correspond to the respective parameter or may be derived from the respective parameter. It should be understood, that the one or more parameters may be obtained from the converter and/or one or more sensors. The feature importance can provide a way to rank the features based on their contribution to the final prediction. More particularly, the feature importance involves calculating a score for all or at least part of the input features (or hidden features), e.g., in a machine learning model, to determine which ones are the most important. Hence, by way of the feature importance one or more of the parameters may be ranked according to their contribution in determining the anomaly or the anomaly score. That is, the feature importance may be determined for the one or more parameters, e.g., during the operation of electro-mechanical system and/or of the controlled process, for example when an anomaly has been determined. However, in the general case, a feature importance may be determined for any period of operation of the electro-mechanical system, i.e. also a nominal operation. As shown in Figure 5 the importance score, also referred to as relevance in Figure 5, of the respective parameter may be given as a percentage for the respective parameter contributing to the anomaly detection and/or anomaly score. As shown in Figure 5 the torque the torque has a relevance of 35%, the torque generating current has a percentage of 26% and the DC link voltage has a percentage of 19%. Other parameters may be present but are neglected. Now, a set of parameters and the corresponding importance scores may be saved as an event, which may, in particular, relate to a fault category. Thus, a user may identify and/or create such one or more events, or, more particularly, one or more fault categories based on a, e.g., selected, segment of the operating data or the segment of the time series therein. As shown in Figure 6, the event may be named "normal operation", may comprise a description such as "steady state operation" and a further action or no action to be performed, i.e. "regular maintenance interval".

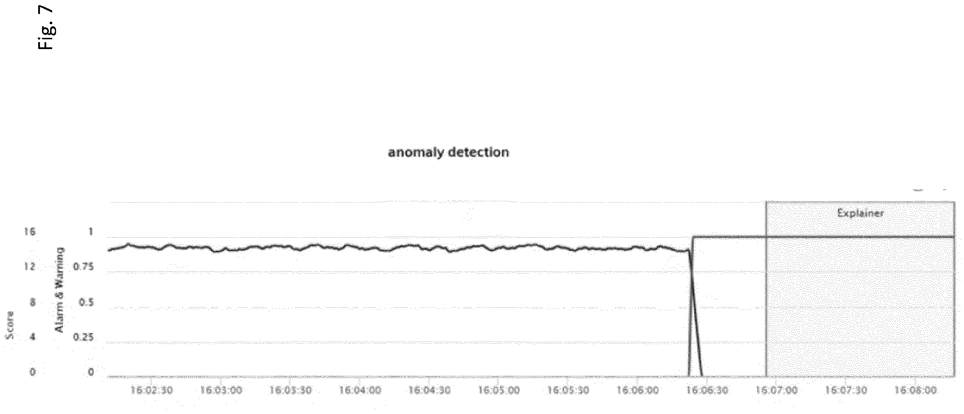

Turning to Figure 7 the same anomaly score as in Figure 4 is shown, but here a segment where an anomaly is determined has been selected. That is, a segment in which an anomaly is present has been detected, and, e.g., selected by a user. An anomaly has been detected following from the time stamp 16:06:30, at which the anomaly score indicates an anomaly in the behavior or operation of the electro-mechanical device and/or the controlled process. Now, the relevant segment may be determined automatically or selected by a user. As before from the detection of the anomaly on an alarm may be output, and e.g. displayed to a user.

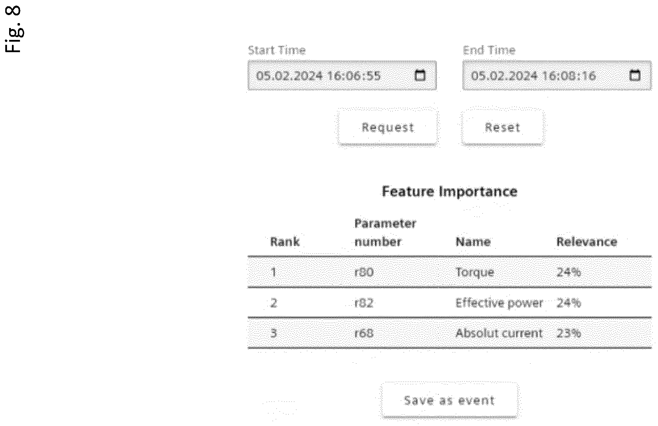

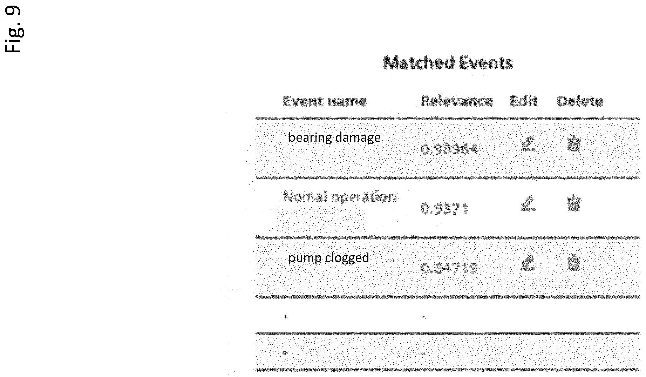

As shown in Figure 8, for the selected segment from Start Time 16:06:50 to the End Time 16:08:16 the operating data may be analyzed. As a result, the impact score, also referred to as importance score and given as a percentage denoted as relevance in Figure 8 may be determined. For example, e.g., for the selected segment, the torque may have a relevance of 24%, the effective power may have a relevance of 24% and the absolute current may have a relevance of 23% in determining the anomaly score. Thus, in this case the parameters importance may have a specific share in the detection of the anomaly or anomaly score. This share may be used to match the anomaly detected to other, e.g., previously detected events or anomalies, for example given as one or more fault categories as shown in Figure 9. Any determined, identified, or detected event or anomaly may be matched to one or more already existing events and/or fault categories. Hitherto, the one or more impact scores of the event or anomaly may be used. As shown in Figure 9, the event or anomaly of Figure 7 has been compared with such already existing events and a similarity, also referred as relevance in Figure 9, has been determined. As a result, it is determined that the event most likely fault category is a bearing damage with a relevance or similarity of 0.98964, that a normal operation has a similarity of 0.9371 and a clogged pump has a relevance or similarity of 0.84719. The similarity may be determined based on a similarity measure such as cosine similarity or cosine distance, or may be determined based on a machine learning model, such as an artificial neural network. Thus, a classification of the event or anomaly into one or more events and/or fault categories may be performed, e.g., by inputting the impact scores of the actual values and/or setpoint values of an anomaly into the machine learning model or otherwise matching the respective anomaly scores of an anomaly with events and/or fault categories already created.

Hence, an anomaly may be recorded as a fault category. If further anomalies occur, the relevance of these events can be compared, i.e. matched, with the existing ones. The calculated relevance (with values between 0 and 1) of these matched events indicates how similar they are to the newly calculated "Feature Importance Relevance" (in %). A value close to 1 means a strong similarity. In this way, recurring anomalies can be identified.

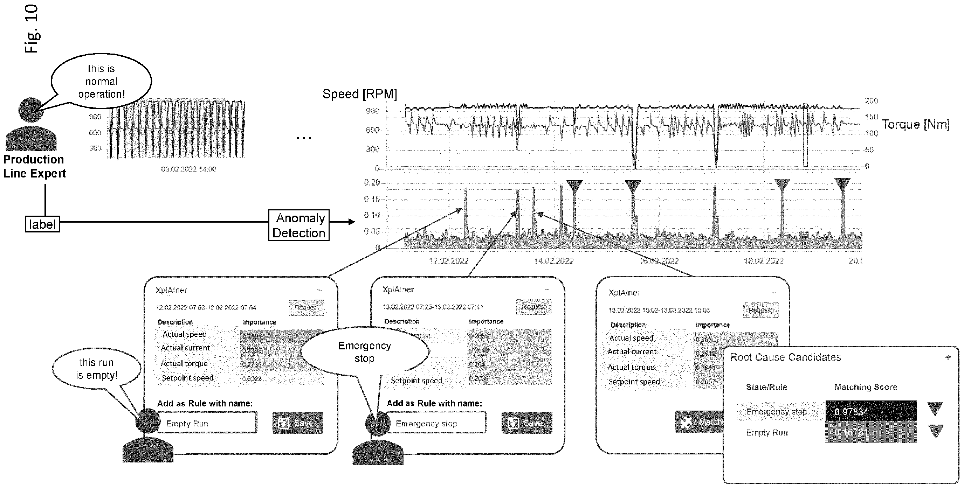

Now turning to Figure 10, if an anomaly occurs, an explanation, e.g. in the form of a labeling and/or fault category, may be created and/or identified. Feature importance values are provided, e.g. in %, as shown in the "Relevance" column. The parameters and values that make up the main contribution, e.g., of the respective input features, to the anomaly score may be determined. The feature importance values may assist in the interpretation of the anomaly and contribute in making the anomaly detection transparent and comprehensible. A high feature importance percentage value means that the parameter has a has a greater impact on the anomaly decision. The calculation of the feature importance values may be based on the input parameters, e.g. actual values and or setpoint values, of the electro-mechanical system and/or the anomaly score.

As described herein, the method steps may be used to determine and/or explain anomalies. However, as also explained herein, it is possible to determine and/or explain periods in which no anomaly has occurred.

At first an anomaly detection may be performed. The anomaly detection detects changes in the system based on a predefined reference state, a so-called fingerprint, which represents the nominal state of the machine, cf. European patent application publication EP 4239419 A1 for further details on the anomaly detection. The anomaly detection model, e.g., comprising a machine learning model, calculates a so-called anomaly score, which is an indicator of the size of the deviation from the fingerprint. Hitherto, operating data of the electro-mechanical system may be analyzed. For example, the peaks in the anomaly score, as for example shown in Figure 3, indicate a high deviation from the fingerprint. These areas are detected as an anomaly.

Once an anomaly has been detected by the anomaly detection model, an explanation of the anomaly may be determined, e.g. by calculating so-called importance scores, for example for the input features and/or hidden features of the anomaly detection model. The explanation may thus enable an interpretation of the anomaly and make the model decision transparent and comprehensible. The explanation, e.g., provided in the form of the one or more importance scores, shows the contribution of each input (e.g., actual values and/or setpoint values of current, speed, DC link voltage, etc.) to the anomaly detection model output and thus its contribution to the model's decision. The contribution of each input may be given as a numerical value and is inter alia referred to as feature importance. Features with high attribution generally have a greater influence on the model's decision when detecting an anomaly. This can be used, e.g., by the user, to enable troubleshooting. There are various methods that enable the analysis and/or evaluation of the decision logic of the anomaly detection model, e.g. LIME, SHAP.

Then, the user has the possibility to label the one or more anomalies that have been determined, e.g., using the explanations. The labeling may be performed via a user interface. In order to support the user, the time series data may be visualized, cf. Figure 3. The labeling may be input into corresponding fields are available for entering the label(s). In addition to the label, the user can also enter a free text describing the error. Furthermore, one or more actions taken or to be taken to correct the condition causing the problem may be entered. This data, i.e. the label and eventually associated meta-information, such as, e.g., period of anomaly, feature importance, etc., may be stored in a database for further processing. The user can also rate the anomaly detection model as part of the labeling process. For example, an anomaly detected by the model may be labeled as "healthy", i.e. indicating a nominal operation, and that the anomaly has been identified by the anomaly detection model as a false positive. This may be the case, for example, with new operating points and/or system configurations of the electro-mechanical system and /or the controlled process are implemented. Although these are no real anomalies, they were not trained/taught to the anomaly detection model, as they were for example missing in the fingerprint and therefore were detected as anomalies. This assessment can be used to continuously improve the anomaly detection model, e.g., including retraining the anomaly detection model. Iterative learning methods can be applied, or the anomaly detection model can be completely retrained. Thus, by the labelling one or more fault categories, e.g., for classifying one or more anomalies detected, may be created.

After one or more faults have been labeled, i.e. fault categories created, one or more future anomalies can be classified, e.g., automatically. For example, rule matching, e.g., using a similarity measure, may be used. Therein, one or more anomalies are classified based on the distance between their feature importance and that of one or more fault categories, e.g. in the database. To calculate the distance, a similarity measure or function, such as cosine similarity, can be used. The fault category or label with the smallest distance to the (feature importances of the operating data) of the anomaly is determined, and may thus best represent the classified defect.

Instead, or in addition, to the rule matching, a trained classification model may be used. The classification model, e.g., a machine learning model, such as a neural network, can be trained with the labeled data, i.e. fault categories and the corresponding feature importances, and updated whenever one or more new labels, or one or more fault categories are created, e.g. entered in the database. The classification model, like the anomaly detection model, is applied to the operating data. Both models can run in parallel. This means that a supervised learning approach can now be implemented instead of unsupervised learning.

One or more recommendations for action, or recommended actions, may be defined, e.g., by the user, for a classified anomaly, e.g. a fault category, may be (completely) independent of the electro-mechanical system, and may not be influenced by it. Such recommended action(s) may thus relate to one or more process variables, and/or one or more maintenance tasks. However, the recommended actions can also be caused and/or influenced by the electro-mechanical system itself (e.g. parameter settings of the motor and/or converter). In any case, a specific recommendation for action may be determined, e.g. to enable and/or assist a user, such as a plant operator, for example in mitigating and/or removing the condition causing the fault. One or more specific recommendations for action may be externalized. The labels entered, e.g., by the user, can provide a specific recommendation for action by means of a detailed description. Thus, by means of the proposed anomaly detection, a solution is provided that enables versatile use in a wide variety of industries and applications, as the system is able to take into account the industry know-how of the user through the fault classification. In this way, concrete measures are suggested and may carried out automatically in order to eliminate any problems that may arise. Thus, an automatic adaptation in the electro-mechanical system based on the recommended action may be performed. An extension to the recommended action is possible for scenarios that can be (directly) influenced by the electro-mechanical system. The user also has the option of making automatic adjustments to the parameters, e.g. the one or more setpoint(s) or setpoint value(s), e.g. if this is proposed by the recommendation for action which may comprise specific parameters including new setpoint specifications. Manual intervention may thus no longer be necessary.

Stil further an adaption of the process controlled or influenced by the electro-mechanical system is possible. For example, based on the labeling, i.e. the recommended action(s), one or more process parameters such as pressure, flow, fill level, and/or temperature may be adapted. Furthermore, the recommended action may comprise repair and/or replacement instructions of one or more elements of controlling the process, such as one or more valves. Still further the recommended action may comprise maintenance plans and/or maintenance actions such a replacement but also as cleaning, e.g., due to a clogged pipe, a cleaning of the pipe may necessary and/or recommended.

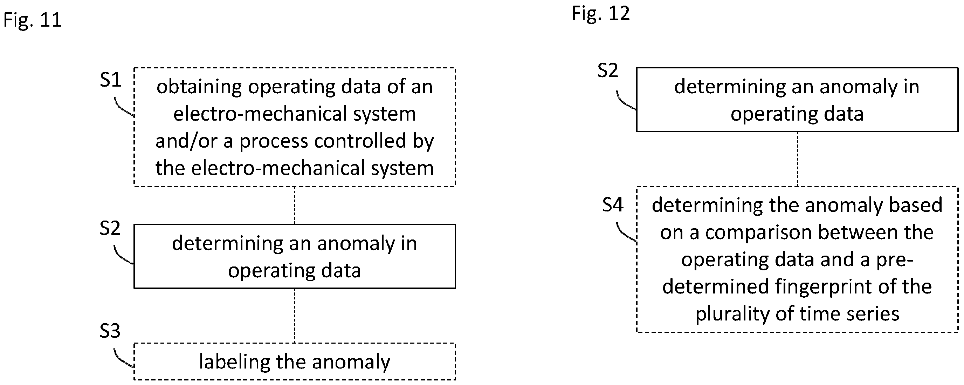

Further exemplary steps are shown in Figures 11 to 20. As shown in Figure 11, in a first step S1 operating data of an electro-mechanical system and/or a process controlled by the electro-mechanical system may be obtained. As mentioned, the operating data may relate to the operation of the electro-mechanical system and/or a controlled process. The operating data may be data obtained during the operation of the electro-mechanical system and/or a process controlled. The operating data may be obtained directly form the controlled process, e.g. by way of one or more sensors, such as vibration sensors, flow sensors, temperature sensors or the like. Instead, or in addition, one or more sensors attached to the electro-mechanical system such as a current sensor and/or a vibration sensors, may be used. In any a case a sensor operatively coupled to the electro-mechanical system and/or a process controlled may be used. Therein, the one or more sensors may generate the operating data. The operating data may comprise a plurality of time series, wherein each time series corresponds to actual values, preferably obtained by one or more sensors In addition, or instead, the operating data may comprise one or more setpoint values, which may also vary over time, of the electro-mechanical system and/or of the controlled process. Thus, also the setpoint values may yield a time series, Thus the operating data, the plurality of time series, the actual values and/or the setpoint values may be indicative of the behavior and/or the operating state of the electro-mechanical system and/or of the controlled process. Thus, a condition monitoring of an electro-mechanical system and/or a process controlled by the electro-mechanical system may be performed. As the case may be, the operating data may be obtained from a converter of the electro-mechanical system, for example of a converter that powers a motor. Thus, an apparatus may be communicatively coupled to the converter and may obtain the operating data from said converter. The operating data may be available in the form of one or more parameters in the converter, e.g. a memory of the converter form where they are obtained, as, e.g., shown in Figure 2. The operating data may relate to one or more physical properties of the electro-mechanical system and/or the controlled process.

In a step S2, an anomaly in operating data may be determined. As mentioned, the operating data may relate to the operation of the electro-mechanical system and/or the controlled system. Since there is a plurality of time series a multivariate analysis of the operating data may be performed. As described herein, the anomaly may be determined using an anomaly detection model. The anomaly detection may thus be based on a (trained) machine learning model. The anomaly detection model may thus take the operating data as input and may output an anomaly indication. The anomaly indication may either be discrete valued, e.g., up to three values, for example zero or one, or alarm, warning, or no anomaly. Instead, or in addition, the anomaly indication may be an anomaly score comprising a plurality of values, e.g. within a (real-valued, e.g., floating point) interval. Based on the anomaly indication an alarm may be raised, output and/or displayed, or otherwise indicated, to a user.

In a step S3, the anomaly may be labelled. The labeling may comprise, e.g., based on user input, an indication of a recommended action, in particular a maintenance task, for mitigating and/or resolving a condition causing the anomaly. For example, the labeling may comprise an explanation for the anomaly, i.e. the underlaying condition. Furthermore, as explained herein, the labeling may relate to one or more maintenance tasks such as inspection, cleaning, repair and/or replacement. The labeling may be provided in textform, e.g. using one or more alphanumeric symbols. The labeling and thus the recommended action may refer to one or more adjustable parameters of the electro-mechanical system and/or to one or more process parameters of the process controlled by the electro-mechanical system. For example, the labeling and/or the recommended action may comprise one or more setpoints of the electro-mechanical system and/or the controlled process. These may then be applied automatically or may be applied, e.g., set manually, by a user to mitigate and/or resolve the condition causing the anomaly.

Turning to Figure 12, in a step S2 an anomaly may be determined in the operating data. To that end, the anomaly may be determined in a step S4 based on a comparison between, e.g., a segment of, the operating data and a pre-determined fingerprint of the plurality of time series, the fingerprint comprising historical data of the operation of the electro-mechanical system and/or the controlled process, and/or representing a nominal operation of the electro-mechanical system and/or the controlled process. Now, one or more segments may be selected, e.g., by a user. Alternatively, the segment may be moving window, of a certain, e.g. configurable size, running over the operating data. It should be understood, that the segment comprises respective sub-segments of the plurality of time series in the operating data. That is, the segment relates to a time period and the part of the time series within that time period. Similar to the segment, a fingerprint of the operating data may be necessary. In order to be able to recognize anomalies, a reference, e.g. a reference measurement, i.e., a so-called fingerprint, may be required. All, e.g. typical, one or more operating points for the electro-mechanical system and/or the controlled process may be recorded in the fingerprint. The fingerprint may serve for determining the anomaly. The fingerprint may thus be used for training the anomaly detection model, e.g., a machine learning model. Hence, a model of one or more operating states of the electro-mechanical system and/or the controlled process, e.g., the drive application, is created from the fingerprint, e.g. using a machine learning model.

For example, the actual values and/or setpoint values are indicative of a speed, a torque, a current, a voltage, and/or a vibration of the electro-mechanical system. Other parameters may also be used, as e.g. described herein in particular in relation to Figure 2.

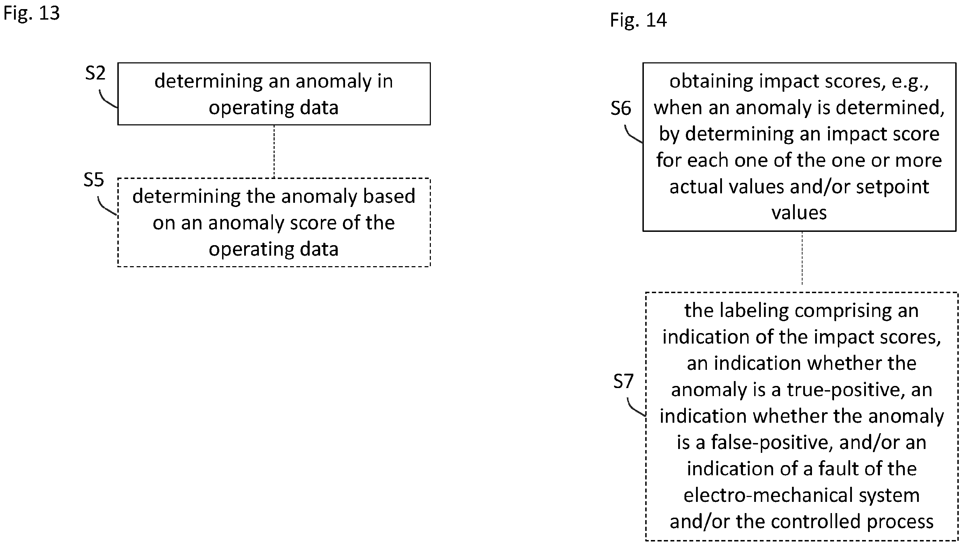

As shown in Figure 13 and as described before a step S2 of determining an anomaly in the operating data may comprise a step S5 of determining the anomaly based on an anomaly score of the operating data. For example, a threshold may be set based on which an anomaly may deem present. For example, the anomaly score may be determined as described herein and may indicate a deviation between the operating data and the pre-determined fingerprint.

Now turning to Figure 14, one or more impact scores may be obtained in a step S6, e.g., when an anomaly is determined, by determining an impact score for each one of the one or more actual values and/or setpoint values. Thus, an impact score may relate to a feature, parameter or signal input (to the anomaly detection model), and to the contribution of that feature, parameter or signal in determining the anomaly. As described herein the impact score may be a feature importance. The anomaly score may also be provided as a (feature) relevance, e.g. as a percentage (among all the feature, signals or parameters input). It should be understood that the impact score may be determined in the labeling phase and may also be determined during the later operative phase, e.g. for matching an anomaly to already created one or more fault categories.

In a step S7, the labeling may comprise an indication of the impact scores, an indication whether the anomaly is a true-positive, an indication whether the anomaly is a false-positive, and/or an indication of a fault of the electro-mechanical system and/or the controlled process. Thus, an automatic or user-based labeling with respect of the type of anomaly may be performed. The labeling may comprise one or more of the impact scores discussed. As discussed herein the impact scores may serve in distinguishing or matching anomalies and/or fault categories, e.g. matching an anomaly with a fault category. Hitherto, at first a labeling of the anomaly is performed.

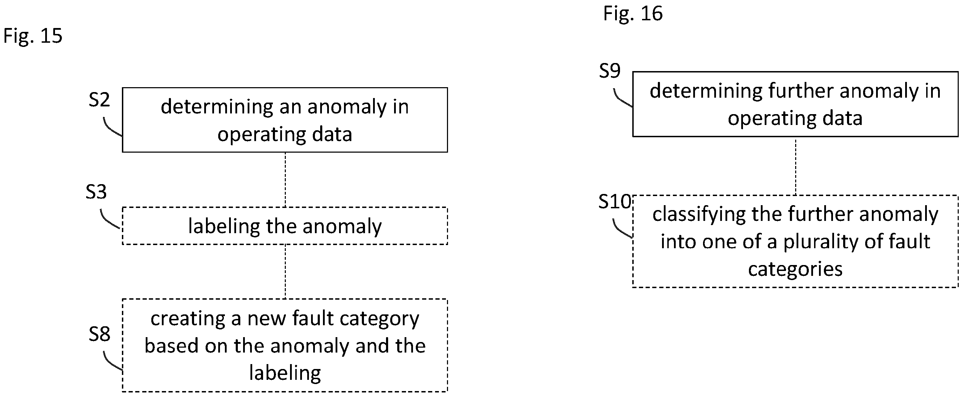

Thus, now turning to Figure 15, in a step S2 an anomaly is determined as before. The anomaly may then be labelled in a step S3. Then in a step S8 a (new) fault category based on the anomaly and/or the labeling may be created. As mentioned, the fault category may relate to the electro-mechanical device and/or the controlled process, for example a fault category may be named clogged pipe or bearing damage, and may for example comprise information about the anomaly score and/or the impact score. One or more fault categories may be created and stored in a memory of a data base and/or in the apparatus. A software application may then access and/or retrieve the one or more fault categories. In general, an event corresponding to a certain behavior may identified, and characterized by the one or more impact scores. That is the proposed steps may not only be applied in case an anomaly has been detected but also for identifying one or more operating states of the electro-mechanical system and/or the controlled process, e.g., an empty run may be determined, which may not be classified as an anomaly but as regular operating state.

Later on, when anomaly detection by the anomaly detection model is activated, i.e. in the operative phase, for example after the training phase of the anomaly detection model, one or more anomalies may be determined. For example, another segment in the operating data may be selected, e.g. manually by a user or automatically, e.g. fixed or variable sized window, upon detection of the further anomaly. Thus, now turning to Figure 16, a further anomaly may be determined in the operating data, e.g., of the electro-mechanical system and/or the controlled process, in a step S9. Thus, the behavior of the electro-mechanical system may have changed during time and another anomaly may have occurred. It may be desired to match this anomaly, or event in general to the already created event categories or fault categories as the case may be. In a step S10, the further anomaly may thus be classified into one of a plurality of fault categories. That is the anomaly is matched to a fault category, e.g., the characteristics of another, already known anomaly. This allows for a better understanding of the state of the electro-mechanical system and/or the controlled process, and to adapt the electro-mechanical system and/or the controlled process if desired, for example based on the recommended action.

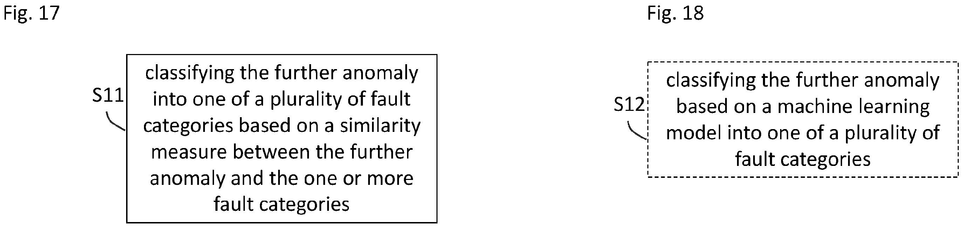

As shown in Figure 17, in a step S11 the classification of the further anomaly into one of a plurality of fault categories may be performed based on a similarity measure between the further anomaly and the one or more fault categories. Hitherto, a similarity measure, such as a cosine similarity, that indicates a similarity between the impact scores of the actual values and/or setpoint values of the further anomaly and reference values of the fault categories may be used.

Instead, or additionally, as shown in Figure 18, in a step S12 the classification of the further anomaly may be based on a machine learning model that classifies the further anomaly into one of a plurality of fault categories. To that end, a machine learning model, such as a artificial neural network, may classify the further anomaly into one of a plurality of fault categories, e.g., by inputting the impact scores of the actual values and/or setpoint values of the further anomaly into the machine learning model. Again, instead of an anomaly any event may be classified. Anomalies being particularly interesting for the operation of the electro-mechanical device and/or the controlled process.

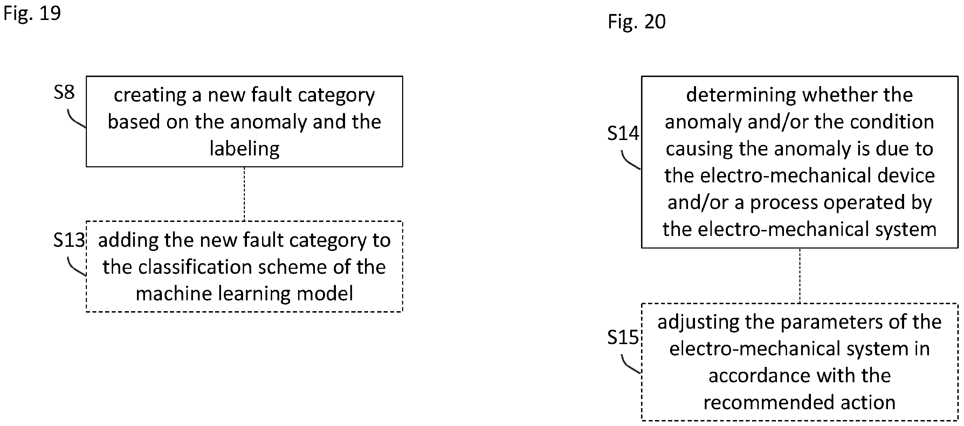

As described and as shown in Figure 19, a new fault category may be created based on the anomaly and the labeling in a step S8. Thereupon, the new fault category may be added to the classification scheme of the machine learning model.

Turning to Figure 20, in a step S14 it may be determined whether the anomaly and/or the condition causing the anomaly is due to the electro-mechanical device and/or a process operated by the electro-mechanical system. Such a distinction may be done based on the labeling information provided and/or based on the impact score of the underlaying operating data. For example, if the anomaly is mainly due to an actual speed values or speed setpoints the anomaly may be due to the electro-mechanical system. Thus, the anomaly or the condition causing the anomaly may be removed or mitigated by adjusting the settings of the electro-mechanical system. Instead, it may be determined based on actual torque values that an empty run has happened and/or that a gaseous phase of an otherwise liquid material has occurred in the controlled process and that thus the process parameters may need to be adjusted, e.g., by releasing pressure by opening/closing one or more valves in order to again reach the liquid phase of the material or to release the gas.

Thus, in a step S15, one or more parameters of the electro-mechanical system and/or the controlled process may be adjusted in accordance with the recommended action, either automatically or by a user. To that end, the recommended action (which may be assigned to the fault category the further anomaly is matched to) is output. For example, the recommended action may comprise one or more new setpoints, either of the electro-mechanical system and/or the controlled process. The parameters of the electro-mechanical system and/or controlled process may be adjusted in accordance with the recommended action, e.g. automatically.

## Claims

1. A, preferably computer-implemented, method of condition monitoring of an electro-mechanical system and/or a process controlled by the electro-mechanical system, comprising the steps of:
determining an anomaly in operating data of the electro-mechanical system, wherein the operating data comprises a plurality of time series, wherein each time series corresponds to actual values, preferably obtained by one or more sensors, and/or setpoint values (varying over time) of the electro-mechanical system,
labeling the anomaly, e.g., based on user input, the labeling comprising an indication of a recommended action, in particular a maintenance task, for mitigating and/or resolving a condition causing the anomaly.

2. The method of the preceding claim further comprising,
wherein the recommended action refers to one or more adjustable parameters of the electro-mechanical system and/or to one or more process parameters of the process controlled by the electro-mechanical system.

3. The method of any one of the preceding claims further comprising,
determining the anomaly based on a comparison between, e.g., a segment of, the operating data and a pre-determined fingerprint of the plurality of time series, the fingerprint comprising historical data of the operation of the electro-mechanical system and/or the controlled process, and/or representing a nominal operation of the electro-mechanical system and/or the controlled process.

4. The method of any one of the preceding claims further comprising,
wherein the actual values and/or setpoint values are indicative of a speed, a torque, a current, a voltage, and/or a vibration of the electro-mechanical system.

5. The method of any one of the preceding claims further comprising,
determining the anomaly based on an anomaly score of the operating data, e.g., indicating a deviation between the operating data and the pre-determined fingerprint.

6. The method of any one of the preceding claims further comprising,
obtaining impact scores, e.g., when an anomaly is determined, by determining an impact score for each one of the one or more actual values and/or setpoint values.

7. The method of any one of the preceding claims,
the labeling comprising an indication of the impact scores, an indication whether the anomaly is a true-positive, an indication whether the anomaly is a false-positive, and/or an indication of a fault of the electro-mechanical system and/or the controlled process.

8. The method of any one of the preceding claims further comprising the step of, creating a new fault category based on (the anomaly and) the labeling, wherein the new fault category serves for classifying anomalies.

9. The method of any one of the preceding claims further comprising,
determining, e.g. at a later point in time, a further anomaly in the operating data of the electro-mechanical system, and
classifying the further anomaly into one of a plurality of fault categories based on a similarity measure between the further anomaly and the one or more fault categories, e.g., wherein the similarity measure, such as a cosine similarity, indicates a similarity between the impact scores of the actual values and/or setpoint values of the further anomaly and reference values of the fault categories, and/or
classifying the further anomaly based on a machine learning model, such as an artificial neural network, into one of a plurality of fault categories, e.g., by inputting the impact scores of the actual values and/or setpoint values of the further anomaly into the machine learning model.

10. The method of any one of the preceding claims further comprising,
creating a new fault category based on the anomaly and the labeling, wherein the machine learning model comprises a classification scheme with a plurality of classes corresponding to fault categories, and
adding the new fault category to the classification scheme of the machine learning model.

11. The method of any one of the preceding claims further comprising,
determining whether the anomaly and/or the condition causing the anomaly is due to the electro-mechanical system and/or a process operated by the electro-mechanical system.

12. The method of any one of the preceding claims further comprising,
wherein the step of labeling the anomaly, e.g., based on user input, comprises one or more recommended actions, e.g., referring to adjustable parameters of the electro-mechanical system, one or more maintenance tasks, and/or to one or more process parameters of a process controlled by the electro-mechanical system, the method further comprises:
determining whether one or more of the recommended actions refer to one or more adjustable parameters of the electro-mechanical system, and
preferably automatically, adjusting the parameters of the electro-mechanical system in accordance with the recommended action.

13. A computer program, preferably stored on a non-transitory medium, comprising program code that when executed performs any one of the method steps according to the preceding claims.

14. An apparatus, preferably comprising a processor and a memory, that is operative to perform the method steps of any one of the preceding claims.

15. A system comprising an electro-mechanical system and the apparatus according to the preceding claim.
